# EUROPÄISCHE PATENTSCHRIFT

(11) **EP 1 273 483 B1**
(45) Veröffentlichungstag und Bekanntmachung des Hinweises auf die Patenterteilung: **02.02.2005**
(21) Anmeldenummer: 02013688.3
(22) Anmeldetag: 20.06.2002
(51) Int. Cl.: B60R 19/12, B60R 19/36, B60R 21/34

(54) **Stossfängerabstützung für verbesserten Fussgängerschutz bei Kraftfahrzeugen**
Bumper support for improved pedestrian protection on motor vehicles
Support de pare-chocs pour protection améliorée des piétons sur véhicules automobiles

(30) Priorität: 05.07.2001 DE 10132704; 02.08.2001 DE 10137911
(43) Veröffentlichungstag der Anmeldung: 08.01.2003
(73) Patentinhaber: Dynamit Nobel Kunststoff GmbH, 91781 Weissenburg (DE)
(72) Erfinder: Berghuis, Paul, 08015 Barcelona (ES)
(74) Vertreter: Scherzberg, Andreas, Dr.

(56) Entgegenhaltungen:
- EP-A- 1 065 108
- EP-A- 1 072 476
- US-A- 3 938 841
- US-A- 5 201 912
- PATENT ABSTRACTS OF JAPAN vol. 2000, no. 19, 5. Juni 2001 (2001-06-05) & JP 2001 039242 A (MAZDA MOTOR CORP), 13. Februar 2001 (2001-02-13)

## Beschreibung

Die Erfindung betrifft ein Stoßfängersystem für ein Kraftfahrzeug mit einer energieabsorbierenden Struktur und einem mit dem Stoßfänger einstückig ausgebildeten oder an diesem befestigten Spoiler.

In den vergangenen Jahren wurden die Stoßfängersysteme in erster Linie für einen besseren Cw Wert, niedrigere Reparaturkosten sowie besseres Crashverhalten weiterentwickelt.

Weitere passive Sicherheitsmaßnahmen wie Airbag usw. beschränken sich auf den Selbstschutz aber nicht auf den Partner, besonders den Fußgänger.

Die relativ schweren Verletzungen bei Unfällen mit Fußgängern rühren von einem durch das Überfahren, zum anderen daher, dass der Fußgänger mit dem Bein unter das Fahrzeug taucht, während der Oberkörper auf die Motorhaube aufschlägt. Aufgrund dieser Verbiegung kommt es insbesondere im Kniebereich zu komplizierten Verletzungen mit Dauerschäden.

Aus der EP 1 072 476 A2 ist eine Stoßfängerabstützung für Kraftfahrzeuge mit einer energieabsorbierenden Struktur und einem mit dem Stoßfänger einstückig ausgebildeten oder an diesem befestigten Spoiler bekannt, wobei der Spoiler durch eine am Fahrzeug angebrachte Abstützung in seiner Auslenkung in Fahrzeuglängsrichtung begrenzt ist und die Abstützung mit Abstand hinter dem Spoiler angeordnet ist.

Aus der gattungsbildenden EP 1 065 108 A ist eine ähnliche Stoßfängerabstützung bekannt, wobei die Abstützung einen Deformationsbereich aufweist.

Der Erfindung liegt die Aufgabe zugrunde, ein Stoßfängersystem für Kraftfahrzeuge derart weiterzubilden, dass der Fußgängerschutz verbessert ist und bei hohen Kräften das Frontend geschützt ist.

Erfindungsgemäß wird diese Aufgabe dadurch gelöst, dass in der Abstützung außerdem eine Sollbruchstelle integriert ist.

Bei einem Aufprall eines Fußgängers auf den Stoßfänger wird ein Teil der Aufprallenergie durch den Stoßfänger mit seiner energieabsorbierenden Struktur aufgefangen. Der Spoiler wird dabei in Fahrzeuglängsrichtung verschoben bis er an der Abstützung anliegt. Dadurch wird das Bein eines Fußgängers nicht unter das Fahrzeug eingeklemmt und der Biegewinkel klein gehalten.

Ist die Aufprallenergie größer, so nimmt der Deformationsbereich in der Abstützung diese Energie auf. Dies geht so weit bis auch der Deformationsbereich vollkommen zusammengedrückt ist. Ist die Aufprallenergie noch größer, bricht die Sollbruchstelle und damit die Abstützung ab. Hierdurch wird das Frontend geschützt.

Vorteilhafterweise ist die Abstützung am Frontend befestigt oder im Frontend integriert.

In vorteilhafter Ausgestaltung der Erfindung ist der Deformationsbereich ein Federbalg. Voraussetzung ist jedoch, dass der Deformationsbereich eine energieabsorbierende Struktur aufweist.

Die Sollbruchstelle ist vorteilhafterweise eine abreißende Schraubverbindung, z. B. die mit der die Abstützung am Frontend befestigt ist.

Vorteilhafterweise ist das zum Spoiler gewandte Ende der Abstützung deckungsgleich zur Form des Spoilers ausgebildet, so dass eine möglichst große Fläche zur Abstützung zur Verfügung steht. Es reicht auch schon aus, wenn das Ende der Abstützung an die Form des Spoilers angepasst ist.

Zweckmäßigerweise erstreckt sich die Abstützung einstückig nahezu über die gesamte Breite des Fahrzeugs, so dass der Spoiler überall abgestützt ist.

Je nach der Ausbildung des Frontends besteht die Abstützung erfindungsgemäß aus Blech, Kunststoff oder einem Hybrid.

In bevorzugter Ausführungsform ist die energieabsorbierende Struktur ein Schaumstoff.

Besonders eignet sich das erfindungsgemäße Stoßfängersystem für Personenkraftwagen.

Weitere Merkmale der Erfindung zeigen die Figuren, die nachfolgend beschrieben sind. Es zeigt:
- Fig. 1: einen Schnitt durch ein Kfz Frontend mit einer Abstützung des Spoilers nach dem Stand der Technik und
- Fig. 2a, b, c: eine erfindungsgemäße Ausführungsform in drei Phasen.

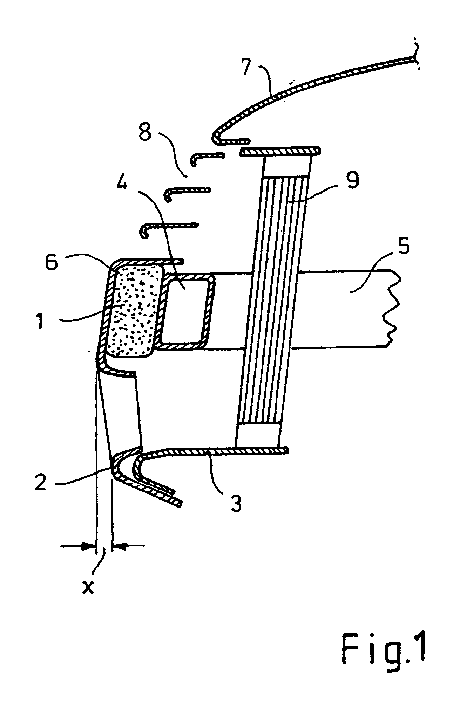

Fig. 1 zeigt in einem Schnitt ein Frontend eines Kraftfahrzeugs bzw. Personenkraftwagens nach dem Stand der Technik. Zwischen den Längsträgem 5 ist ein Querträger 4 angeordnet, vor dem sich eine energieabsorbierende Struktur 1 befindet, die aus Schaumstoff besteht. Die Außenhaut 6 des Stoßfängers umgibt die energieabsorbierende Struktur 1 und bildet auch zugleich den unterhalb angeordneten Spoiler 2. Weiterhin sind die Motorhaube 7, die Lüftungsschlitze 8 und der Kühler 9 schematisch angedeutet.

Erfindungsgemäß ist der Spoiler 2 durch eine Abstützung 3 in seiner Auslenkung in Fahrzeuglängsrichtung begrenzt. Mit Fahrzeuglängsrichtung ist die Erstreckung der Längsträger 5 verstanden. Die Abstützung 3 ist mit Abstand hinter dem Spoiler angeordnet. Das Maß x gibt die Auslenkung des Spoilers 2 an, bis dieser an der Abstützung 3 anliegt.

Bei einem Aufprall mit einem Fußgänger wird ein Teil der Energie durch den Stoßfänger mit dem Schaumstoff aufgefangen, während sich im unteren Bereich der Spoiler 2 nach hinten in Richtung Heck des Fahrzeugs bewegt. Der Abstand x verringert sich, bis der Spoiler 2 an der Abstützung 3 anliegt. Dadurch wird das Bein des Fußgängers nicht unter das Fahrzeug eingeklemmt. Die Abstützung kann je nach Ausführung des Frontends in Blech, Kunststoff oder als Hybrid ausgeführt werden.

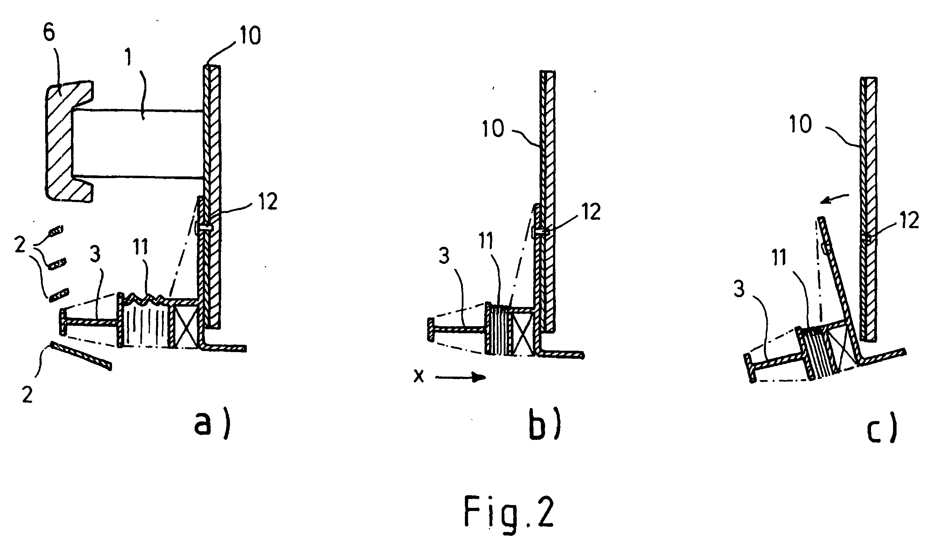

Fig. 2a zeigt in einem Schnitt ein Frontend 10 eines Kraftfahrzeugs bzw. Personenkraftwagens. An diesem Frontend 10 ist eine energieabsorbierende Struktur 1 angeordnet, die aus Schaumstoff besteht. Die Außenhaut 6 eines Stoßfängers umgibt diese energieabsorbierende Struktur 1 und bildet auch zugleich den Spoiler 2.

Der Spoiler 2 ist in seiner Ausdehnung in Fahrzeuglängsrichtung durch die Abstützung 3 begrenzt. Diese Abstützung 3 ist mit Abstand hinter dem Spoiler 2 angeordnet.

In der Abstützung 3 ist erfindungsgemäß ein Deformationsbereich 11 integriert. In dieser Ausführungsform ist der Deformationsbereich 11 ein Federbalg.

Über eine Schraubverbindung 12 ist die Abstützung 3 am Frontend 10 befestigt. Diese Schraubverbindung 12 ist als Sollbruchstelle ausgebildet.

Die beschriebene Fig. 2a zeigt eine Ansicht im Ruhezustand, d. h. vor einem Unfall.

Fig. 2b zeigt eine Ansicht im Falle eines Unfalls. Der Deformationsbereich 11 wird je nach der Stärke des Aufpralls mehr oder weniger zusammengedrückt. Übersteigt die Aufprallenergie die Energie, die der Deformationsbereich 11 aufnehmen kann, so reißt die als Sollbruchstelle ausgebildete Schraubverbindung 12 bei einer gewissen vorgebbaren Energie ab. Hierdurch ist das Frontend 10 geschützt. Die maximale Kontraktion des Deformationsbereichs 11 ist mit einem x in Fig. 2b gekennzeichnet.

In allen Ausführungsformen ist vorteilhafterweise an der Spitze der Abstützung 3 eine energieabsorbierende Struktur angeordnet.

## Patentansprüche

1. Stoßfängersystem für ein Kraftfahrzeug mit einer energieabsorbierenden Struktur (1) und einem mit dem Stoßfänger einstückig ausgebildeten oder an diesem befestigten Spoiler (2), wobei der Spoiler (2) durch eine am Fahrzeug angebrachte Abstützung (3) in seiner Auslenkung in Fahrzeuglängsrichtung begrenzt ist, und die Abstützung (3) mit Abstand hinter dem Spoiler (2) angeordnet ist, wobei in der Abstützung (3) ein Deformationsbereich (11) integriert ist, **dadurch gekennzeichnet, dass** in der Abstützung (3) ein außerdem eine Sollbruchstelle (12) integriert ist.

2. Stoßfängersystem nach Anspruch 1, **dadurch gekennzeichnet, dass** der Deformationsbereich (11) ein Federbalg ist.

3. Stoßfängersystem nach Anspruch 1 oder 2, **dadurch gekennzeichnet, dass** die Sollbruchstelle (12) eine abreißende Schraubverbindung ist.

4. Stoßfängersystem nach einem der Ansprüche 1 bis 3, **dadurch gekennzeichnet, dass** die Abstützung (3) am Frontend (10) befestigt oder im Frontend (10) integriert ist.

5. Stoßfängersystem nach einem der Ansprüche 1 bis 4, **dadurch gekennzeichnet, dass** die Abstützung (3) sich nahezu über die gesamte Breite des Fahrzeugs erstreckt.

6. Stoßfängersystem nach einem der Ansprüche 1 bis 5, **dadurch gekennzeichnet, dass** die Abstützung (3) ein Kunststoffteil ist.

## Claims

1. Bumper system for a motor vehicle having an energy-absorbing structure (1) and a spoiler (2) that is formed in one piece with the bumper or is secured to the bumper, with the spoiler (2) being restricted in terms of its deflection in the longitudinal direction of the vehicle by a support (3) that is provided on the vehicle, and the support (3) being arranged at a distance behind the spoiler (2), with a deformation zone (11) being integrated in the support (3), **characterised in that** in addition a predetermined breaking point (12) is integrated in the support (3).

2. Bumper system according to claim 1, **characterised in that** the deformation zone (11) is a spring bellows.

3. Bumper system according to claim 1 or 2, **characterised in that** the predetermined breaking point (12) is a tear-off screw connection.

4. Bumper system according to one of claims 1 to 3, **characterised in that** the support (3) is secured to the front end (10) or is integrated in the front end (10).

5. Bumper system according to one of claims 1 to 4, **characterised in that** the support (3) extends over almost the entire width of the vehicle.

6. Bumper system according to one of claims 1 to 5, **characterised in that** the support (3) is a plastics portion.

## Revendications

1. Système de pare-chocs pour un véhicule automobile comportant une structure (1) absorbant l'énergie et un bas-volet (2) réalisé d'un bloc avec le pare-chocs ou fixé à celui-ci, le bas-volet (2) étant limité sur le plan de son déplacement dans la direction longitudinale du véhicule par un appui-support (3) monté sur le véhicule et l'appui-support (3) étant disposé à distance derrière le bas-volet (2), une zone de déformation (11) étant intégrée dans l'appui-support (3), **caractérisé par le fait qu'**en outre une zone destinée à la rupture (12) est intégrée dans l'appui-support (3).

2. Système de pare-chocs selon la revendication 1, **caractérisé par le fait que** la zone de déformation (11) est un soufflet élastique.

3. Système de pare-chocs selon la revendication 1 ou 2, **caractérisé par le fait que** la zone destinée à la rupture (12) est une liaison à vis de rupture.

4. Système de pare-chocs selon une des revendications 1 à 3, **caractérisé par le fait que** l'appui-support (3) est fixé à l'avant (10) ou est intégré dans l'avant (20).

5. Système de pare-chocs selon une des revendications 1 à 4, **caractérisé par le fait que** l'appui-support (3) s'étend sur la presque totalité de la largeur du véhicule.

6. Système de pare-chocs selon une des revendications 1 à 5, **caractérisé par le fait que** l'appui-support (3) est un élément en matière plastique.
